Europäisches Patentamt

European Patent Office

Office européen des brevets

(11) Publication number: 0 200 353
A2

## EUROPEAN PATENT APPLICATION

(21) Application number: 86302214.1

(22) Date of filing: 26.03.86

(51) Int. Cl.4: H04Q 3/58 , H04Q 11/04

(30) Priority: 27.04.85 GB 8510762

(43) Date of publication of application:
10.12.86 Bulletin 86/45

(84) Designated Contracting States:
AT BE CH DE FR IT LI LU NL SE

(71) Applicant: STC PLC
190 Strand
London, WC2R 1DU(GB)

(72) Inventor: Rees, Frederick Henry
34 Hillfield Park
Winchmore Hill London. N.21(GB)
Inventor: Fisher, David Geoffrey
6 Browning Road
Harpenden Hertfordshire. AL5 4TR(GB)

(74) Representative: Capsey, Sydney Ross et al
Standard Telephones and Cables Patent
Department Edinburgh Way
Harlow Essex CM20 2SH(GB)

(54) Telecommunication system.

(57) The public telephone network is being enhanced by the inclusion of digital exchanges in what was hitherto a mainly analogue network, with digital links between the digital exchanges and also (with suitable conversion) between analogue and digital exchanges. In addition, analogue PABX's are being replaced by digital PABX's, which raises a number of problems.

To deal with one problem a concentrator-expander (2,4) pair can be used, which concentrates a number of digital links (1) on to a set (3), less in number of links to an expander (4) at which the links (3) are expanded to a set of links (6) equal in number and corresponding to the first links which gave access to a digital exchange (5). Signalling uses some of the time slots on the concentrator-expander links (3), so that although communication is channel-concentrated, signalling is not. Such a concentrator-expander pair, or pair gain arrangement, is system-independent.

Digital PABX's, and also digital lines thus added in place of analogue PABX's and lines are parented on digital public exchanges, but also have access to public analogue exchanges. Such digital PABX's and lines retain their old numbers for incoming analogue calls, allocated to the analogue PABX's which they replace, but have new numbers for incoming calls using digital facilities. Outgoing calls use new digital access via a multiplexer (12).

## TELECOMMUNICATION SYSTEM

This invention relates to automatic telecommunication systems which include digital exchanges and a digital network, e.g. of the ISDN - (Integrated Services Ditigal Network) type.

The present telephone switching network in the United Kingdom is predominantly analogue in nature, the analogue exchanges including a range of types of exchange from the old Strowger exchanges to relatively modern processor-controlled exchanges such as TXE4 and TXE4A. The network is currently being enhanced by the provision of digital exchanges such as System X exchanges, with digital inter-exchange links also being provided. Since much of the existing network and its exchanges is relatively modern the two network types, analogue and digital, must exist together for many years. This creates a number of problems relating to interworking, and an object of this invention is to facilitate the overcoming of some of these problems.

According to the invention, there is provided an automatic telecommunication system, which includes an analogue exchange in the public switched telephone network and one or more digital exchanges in the public switched telephone network, and a digital PABX connected to an exchange in the public network in replacement of an analogue PABX formerly connected to the said analogue public exchange, wherein the digital PABX is allotted one or more new directory numbers (DN's) for calls incoming to the digital PABX which use digital facilities, wherein the new digital PABX also has access to the analogue public exchange to which the original analogue PABX was connected, wherein a signalling link is provided between the digital PABX and said original analogue public exchange via which co-operation of the analogue and digital parts of the system are facilitated, wherein non-digital incoming calls to the digital PABX are set up from the analogue public exchanges via suitable conversion means to the digital PABX, wherein a signalling connection is provided between the analogue public exchange and the digital PABX, and wherein all calls set up from the digital PABX are routed via the digital public exchange.

Embodiments of the invention will now be described with reference to Figs. 1, 2 and 3 of the accompanying drawing, which are highly simplified schematic diagrams. Of these drawings, Fig. 1 is not strictly relevant to the present invention, but it is included, with the description thereof, as background to Figs. 2 and 3 which are relevant to the present invention.

A technique which can be used in systems such as the present is the provision of "system independent" concentrator-expander units, which provide digital access in local exchange areas, the concentrators being remote from the parent exchange. This is by contrast with the more conventional use of concentrators, where the concentrator is in effect a switching stage or stages forming part of an exchange from the "systems" aspect but located outside that exchange.

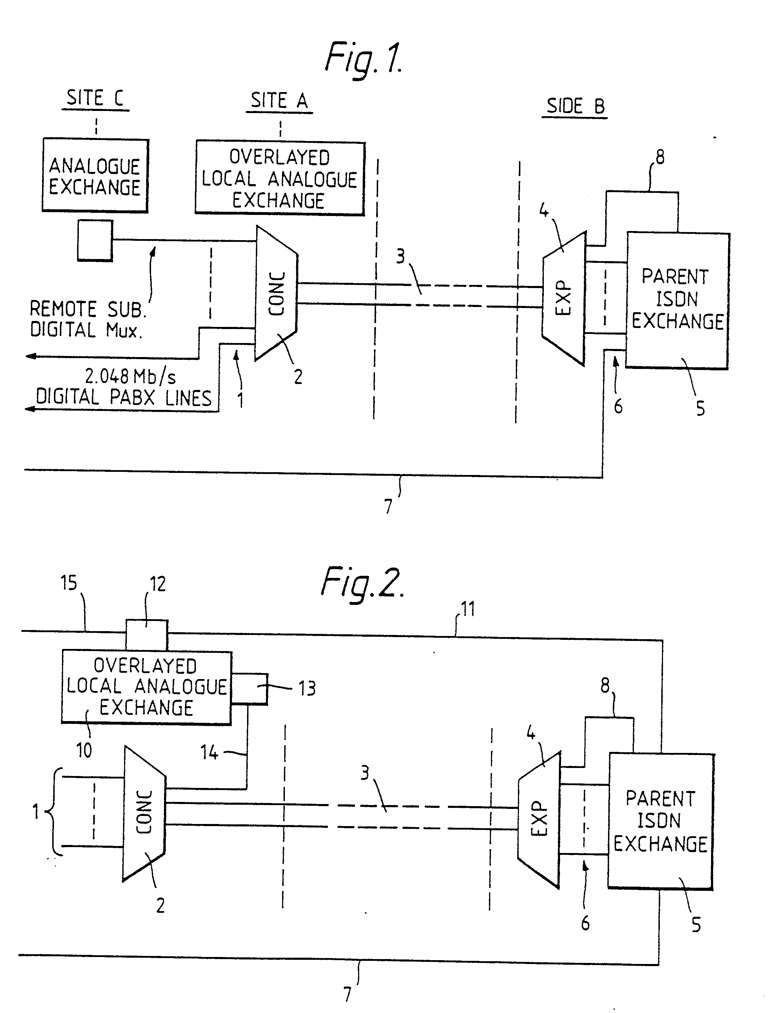

Concentrator-expander units as used in the systems described herein are as shown in Fig.1. Here we have a number $n$ of multi-line IDA - (Integrated Digital Access) links 1 which extend to distant digital PABX's, ISPBX's (Integrated Services PBX's), and multiplexers for digital access to a group of discrete digital subscribers.

Remote digital subscriber line multiplexers, e.g. to give access to digital PABX's, may be provided at the location of the concentrator or remote from the concentrator, as can be seen from Fig. 1. Such multiplexers concentrate up to fifteen digital subscribers' channels and signals onto a 2.048 Mb/s duplex link to/from the concentrator. The signalling is statistically concentrated onto channel 16. Each subscriber has access to two 64 Kb/s channels, plus the use of channel 16 for the transfer of usernetwork signalling.

These links 1 are coupled via a concentrator 2 to a number $m$, where $mn$, of digital links 3 to an expander 4 associated with a parent ISDN exchange 5. This expander expands from the links 3 to a set of links 6 into the ISDN exchange, which links are equal in number to, and respectively correspond to, the links 1. Such a concentrator/expander arrangement is also known as a pair-gain system since it reduces the number of circuit pairs needed for digital access from a local area to a parent digital exchange, which in the British network would most likely be a System X exchange. The link indicated at 7 represents a direct integrated digital access, 2 Mb/sec., via digital line sections where this is justified economically. The parent ISDN exchange 5 also has a connection 8 to the expander 4 to provide maintenance/management access via subscribers' lines to the expander, and thus via the "housekeeping" signalling links to the concentrator control.

In such a system, the expander's function for several concentrators may use the same physical hardware and be controlled by the same expander microprocessor (in most cases replicated in the interest of system security). Such a control interface to the expander's maintenance/management port which can be connected across the network to a centralised maintenance/management function serves to communicate inband by a modem. Routing and source information as to which line on which concentrator is involved in a call is forwarded over the path connected by the set up of a call to/from the centralised facility. Such information is distributed to/accepted from the appropriate "housekeeping" signalling line to/from the concentrator concerned.

When such a technique is used, it is currently assumed that where an analogue PABX parented on an analogue exchange is replaced by a digital PABX, and where digital access to that PABX (e.g. from a digital public exchange) is needed, then a number change is needed. This is, of course, somewhat unpopular with customers, so some amelioration of this difficulty is needed.

In the systems to be described herein, the digital PABX is allowed to retain an existing network number or set of numbers, the number(s) appropriate to the replaced analogue exchange when the latter was associated with the public network. In addition, the digital PABX is assigned a new network number or set of numbers associated with its new parent digital (e.g. ISDN) exchange. The problems which arise due to number change when going over to digital access are solved by the provision of a separate incoming route from the old exchange, i.e. the analogue exchange in the public network to which the original analogue PABX was connected. This assumes that the digital public exchange and the network associated therewith is an overlay on the existing analogue network. This facility of digital access with the retention of an existing directory number (DN) or DN's, in addition to a new DN or set of DN's, is a facility which is needed whether or not the pair gain technique is used.

We now consider Fig. 2, which shows how the "double numbering" approach is implemented in a system using pair gain. The reference numerals used in Fig. 1 reappear in Fig. 2 with the same significances.

In Fig. 2, we see the local analogue exchange 10, which was shown in Fig. 1 at Site A, but not referred to therein. Here the ISDN exchange 5 in addition to being connected to the expander 4 via links 6, is connected via a connection 11 to a mixing multiplexer 12 at the analogue exchange 10. Another connection 15 to the mixing multiplexer 12 is a multi-line integrated digital access to a digital PABX, with traffic mixing at the multiplexer 12 which provides a number of circuits connected to the analogue exchange. The connection 11 and 15 uses 2Mb/sec. DASS 2 signalling, using channel 16 of the multiplex frame. Connection 8 in this case also connects a subscriber line on the ISDN exchange to a maintenance/management port on the expander.

The local analogue exchange 10 also has another multiplexer 13 via which it has access over connection 14 to the concentrator 2; this is a 2 Mb/sec. link, with time asigned channel 16 signalling.

The links 15 and 1 provide 2 Mb/sec. DASS 2 signalling using channel 16 to the digital PABX's. In other implementations a signalling protocol according to the CCITT I Series recommendations for user/network signalling is used over the channel 16 of links 15 and 1 to the digital PABX, and over the channel 16 of links 6 and 11 to the ISDN public exchange.

Although the number of physical channels needed to convey the traffic between the concentrator and the expander is reduced by the use of concentration, the signalling channels are not so concentrated. Although this reduces somewhat the beneficial economies due to the use of pair gain, this is more than complemented for by reductions in development effort, complexity, and signalling delay.

When concentration is used, it is necessary that under overload conditions, new calls will have to be rejected, which in principle can be done either at the concentrator or at the expander. In the present system it is done at the concentrator, so that DASS 2 LAP's (Link Access Protocols) are considered to terminate at the concentrator in all cases. This allows level 3 messages, as defined by the ISO reference model for open systems architecture, associated with calls to be accepted by the concentrator and transferrred via the matching LAP. In this reference model, level 3 relates to so-called network-to-network communications. Thus a message for a call from the exchange over one LAP is relayed over the matching LAP to the destination PABX if it relates to a call to which a traffic channel has been assigned, or if it relates to a new call when a free traffic channel is available. If a call request finds no free traffic channel between the concentrator and the expander, that call is not proceeded with, the message is not sent on, and a clearance message is sent in the reverse direction. This is effected at the concentrator.

With the pair gain system described above, for $n$ PCM traffic channels, the concentrator has to terminate $2n + 2$ signalling channels (64 Kb/sec. each). This assumes that a duplicated pair of signalling channels is used for "housekeeping" messages between the concentrator and the expander.

A simple arrangement for providing the signalling channels will now be discussed, it being assumed as an example that eight PABX exchange digital links 1, Fig. 1, are concentrated on to two links 3, and that channel 16 on each line 3 is used for signalling. It is also assumed that:

(a) Channel 1, system 1 (between concentrator and expander) is used for the 64 Kb/sec. channel between PABX1 and the digital public exchange.

(b) Channel 1, system 2 for PABX 2.

(c) Channel 2, system 1 for PABX 3.

(d) Channel 2, system 2 for PABX 4 and so on. Plugging in the DLT (Digital Line Termination) at the concentrator causes the above indicated assignment of traffic channels for use as signalling channels.

The general principles on which this system are based are illustrated by Fig. 2, already referred to. As already indicated, calls received via the interface to the adjacent analogue local exchange 10, e.g. TXE4A, have to be mixed with calls from the parent ISDN exchange 5, e.g. System X. Originating calls from the PABX are always routed, if a channel is available, between the concentrator 2 and the expander 4 to the parent ISDN exchange 5.

In the simpler case referred to above with respect to Fig. 1, the channel used for a call between the PABX and the ISDN exchange was always the same between the PABX and the concentrator as between the expander and the ISDN exchange. Since calls from the analogue public exchange 10 and calls from the digital exchange 5 are mixed at the concentrator 2, this is no longer possible. A terminating call from the digital exchange 5 will often find that the channel chosen by that digital exchange is already in use between the concentrator 2 and the appropriate PABX for a terminating calls, e.g. from the analogue exchange 10. Hence a free channel has to be chosen for the terminating ISDN call between concentrator and PABX. Since the DASS 2 LAP's are directly associated with the traffic channels, the matching of LAP's (concentrator to PABX, and concentrator to exchange) is changed by the concentrator when it receives the first call set-up message.

Since LAP's are matched at the concentrator, the system operates according to the principles set out earlier for PABX's which do not have to terminate PSTN calls with the old DN, and according to those just described for those which do, all in the same concentrator. The operational mode needed is determined by which sort of digital LTC (Line Termination Card) is used in the concentrator 2 to serve the multi-line IDA interface to the appropriate digital PABX.

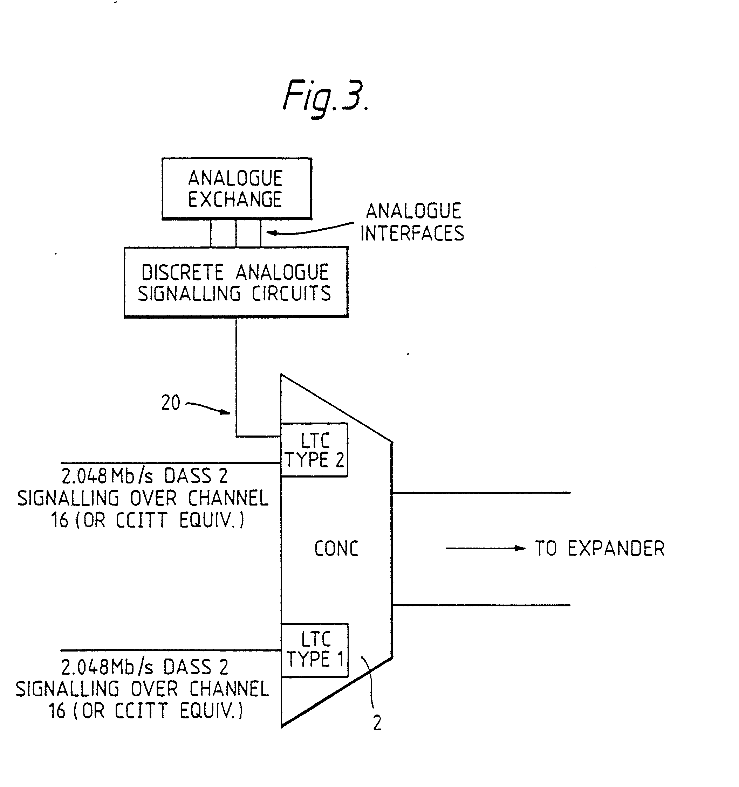

At this point we refer to Fig. 3, which shows part of the arrangement of Fig. 2 as modified by the provision of two different types of LTC to discriminate between a digital PABX with both old and new DN's and a "standard" (possible new) PABX with new DN's only. Here the LTC, where it is desirable for the multi-line IDA interface to be used to terminate calls routed to the digital PABX via the PSTN as well as those routed to/from the ISDN has an additional 2.048 Mb/s duplex port 20. This carries a signalling channel 16 over which the assigned signalling is used for signalling between the concentrator 2 and the multiplexer (not shown in Fig. 3) associated with the analogue exchange. The concentrator does a DASS 2 Channel 16 time assigment signalling conversion on incoming calls from the analogue exchange 10 for PABX's.

If the latter described technique is not used, the control means of the expander could be the master, in which case LAP's terminate at the expander. The fixed algorithm for assigning signal channels avoids the need for coupler operating procedures. In both such cases a port is provided on the expander control to give an output for fault, status, etc. information to a local exchange. Such a port receives/sends messages across the network to a maintenance point.

Recently British Telecom have introduced into the DASS 2 specification the use of a single multi-line IDA for both public network access and for tie lines. The concentrator must "know" at any instant which channels are permanently assigned to these tie lines, which are private circuits. This factor can readily be taken into account by the concentrator control.

Referring again to Fig. 2, we see a multiplexer 12 connected to :

(a) an analogue exchange 10 via subscriber circuits, or subscriber and junction circuits, for direct dialling in (DDI),

(b) the digital PABX concerned via a 2 Mb/sec. line 15 with DASS 2 signalling over channel 16,

(c) the parent digital exchange 5 via a 2 Mb/sec. link 11, again with DASS 2 signalling via channel 16.

All traffic channel LAP's terminate in the multiplexer 12, and traffic to the PABX from the analogue exchange and from the parent digital exchange is mixed, as described above for the concentrator. However, in this case there is no concentration needed for pair-gain purposes, between the sites of the analogue and the ISDN exchanges for the ISDN traffic routed via that multiplexer. The switching of a channel from the PABX link to the exchange link is still needed, but in this case control is integrated into the multiplexer, as is the signalling conversion on incoming calls from the analogue exchange 10 to the digital PABX. Switching between channels in the multiplexer 12 is simpler than that referred to above since it is in essence mainly of a time slot interchange nature. Since we are accepting calls from $n$ analogue links and calls from up to 30 channels from/to the ISDN exchange over the multi-line IDA interface between the multiplexer and the ISDN exchange, and serving both via the IDA interface between multiplexer and digital PABX, some slight concentration, which could cause some call rejection, may occur.

In some cases higher order multiplexing may be used to reduce the cost of digital transmission between the analogue exchange and a distant parent ISDN exchange.

## Claims

1. An automatic telecommunication system, which includes an analogue exchange in the public switched telephone network (PSTN) and one or more digital exchanges in the said PSTN, and a digital PABX connected to an exchange in the PSTN as a replacement for an analogue PABX formerly connected to the said analogue public exchange, characterised in this, that the newly-installed digital PABX is allocated one or more new directory numbers (DN's) for calls incoming to the digital PABX which use digital facilities, the newly-installed digital PABX also having the old DN or DN's allocated to its analogue predecessor, that the new digital PABX also has access to the analogue public exchange to which the original analogue PABX was connected, hence its use of the old DN or DN's, that a signalling link is provided between the digital PABX and said original analogue public exchange so that co-operation of the analogue and digital parts of the system are facilitated, that non-digital incoming calls to the digital PABX using the old DN or DN's are set up from the analogue public exchange via suitable conversion means to the digital PABX, that a further signalling connection is provided between the analogue public exchange and the digital PABX, and that all calls outgoing from the digital PABX are routed therefrom via a said digital public exchange.

2. A system as claimed in claim 1, characterised in this, that one or more digitally-equipped subscriber lines are accessible from an analogue public exchange and from a digital public exchange in the same manner as the digital PABX preferred to in claim 1.

3. A system as claimed in claim 1 or 2, characterised in this, that the analogue local exchange is connected to a said digital local exchange via a digital link, with analogue-digital and digital-analogue conversion being provided by a mixing multiplexer located at the analogue exchange.

4. A system, as claimed in claim 3, characterised in this, that it includes digital PABX's each parented on a said digital public exchange, that first digital links from the digital PABX's are concentrated by a concentrator remote from the parent public exchange onto second digital links less in number than the first digital links, that an expander is provided which expands from the second digital links to a number of third digital links corresponding to the first digital links, which third digital links provide access to the parent digital exchange, that a non-concentrated signalling link extends between the concentrator and the expander so that the communications channels but not said signalling channels are concentrated, that the operations of said concentrator and expander and of the second digital links are substantially independent of the operations of the digital exchange with which the expander is associated, and that the said analogue public exchange has a connection via suitable conversion means to the said concentrator.

5. A system as claimed in claim 4, characterised in this, that the signalling channels are provided by time slot channels on the second digital links.

# Fig.1.

SITE C                SITE A                              SIDE B

ANALOGUE EXCHANGE

OVERLAYED LOCAL ANALOGUE EXCHANGE

CONC
2

REMOTE SUB. DIGITAL Mux.

2.048 Mb/s DIGITAL PABX LINES
1

3

EXP
4

8

PARENT ISDN EXCHANGE
5

6

7

# Fig.2.

15    12                        11

OVERLAYED LOCAL ANALOGUE EXCHANGE
10

13

CONC
2

14

1

3

EXP
4

8

PARENT ISDN EXCHANGE
5

6

7

# Fig.3.

ANALOGUE
EXCHANGE

ANALOGUE
INTERFACES

DISCRETE ANALOGUE
SIGNALLING CIRCUITS

20

LTC
TYPE 2

2.048 Mb/s DASS 2
SIGNALLING OVER CHANNEL
16 (OR CCITT EQUIV.)

CONC

TO EXPANDER

LTC
TYPE 1

2.048 Mb/s DASS 2
SIGNALLING OVER CHANNEL
16 (OR CCITT EQUIV.)

2